# EUROPÄISCHE PATENTANMELDUNG

(11) **EP 1 958 733 A2**
(43) Veröffentlichungstag der Anmeldung: **20.08.2008**
(21) Anmeldenummer: 08101092.8
(22) Anmeldetag: 30.01.2008
(51) Int. Cl.: B25D 11/06

(54) **Verfahren zur Steuerung eines Linearmotors zum Antrieb eines Schlagwerks**

(30) Priorität: 13.02.2007 DE 102007000085
(71) Anmelder: HILTI Aktiengesellschaft, 9494 Schaan (LI)
(72) Erfinder: Schaer, Roland, 9472 Grabs (CH); Binder, Albert, 9470 Buchs (CH); Mündle, Jürgen, 6822 Satteins (AT)
(74) Vertreter: Wildi, Roland

(57) **Zusammenfassung**

Verfahren zur Steuerung eines einphasigen Linearmotors (1) zum Antrieb eines Schlagwerks (2) mit einer losen Kopplung (4) zwischen einem geregelt angetriebenen Läufer (5) des Linearmotors (1) und einem Schläger (6) des Schlagwerks (2), welcher innerhalb einer genau einen Kraftstoss (K) des Schlägers (6) auf ein Werkzeug (8) oder einen Döpper (7) ausführenden Schlagperiode eine Zugphase (Z), bei welcher die lose Kopplung (4) an einer läuferseitigen Kontaktfläche (KL) mit einem einseitigen Kontaktzwang anliegt, und eine Druckphase (D) aufweist, bei welcher die lose Kopplung (4) an einer schlägerseitigen Kontaktfläche (KS) mit einem einseitigen Kontaktzwang anliegt, und wobei jeweils zwischen der Zugphase (Z) und der Druckphase (D) je eine Wechselphase (W) vorhanden ist, bei welcher der einseitige Kontaktzwang über eine kontaktfreie Spiellänge (S) zwischen den beiden Kontaktflächen (KL-KS) der losen Kopplung (4) wechselt, indem der Läufer (5) geregelt den einseitigen Kontaktzwang zu der einen Kontaktfläche (KL/KS) löst und den einseitigen Kontaktzwang zur anderen Kontaktfläche (KS/KL) herstellt, wobei zumindest die Wechselphase (W) von der Zugphase (Z) zur Druckphase (D) mit der örtlichen Lage des Läufers (5) zur Polperiode (P) von ausgeprägten Polen des Linearmotors (1) diskret getriggert wird.

## Beschreibung

Die Erfindung bezeichnet ein Verfahren zur Steuerung eines einphasigen Linearmotors mit ausgeprägten Polen zum Antrieb eines Schlagwerks mit einer losen Kopplung zwischen dem Läufer des Linearmotors und dem Schläger des Schlagwerks, welches vorzugsweise Teil einer zumindest teilweise schlagenden Elektrohandwerkzeugmaschine ist.

Nach der GB1396812 ist bei einem zum Antrieb eines Schlagwerks ausgebildeten Linearmotor dessen weichmagnetischer Läufer direkt als Schläger ausgebildet, der direkt auf das maschinenseitige Stirnende des Werkzeugs bzw. Döppers schlägt. Nach der US4553074 ist ein zugeordnetes Verfahren zur Steuerung des Linearmotors bekannt.

Nach der EP0718075 ist der permanentmagnetische Läufer eines Linearmotors ohne ausgeprägte Pole mit dem Schläger über eine lose Kopplung mit genau zwei Kontaktseiten verbunden, zwischen denen eine kontaktfreie Spiellänge ausgebildet ist. Im Verlauf einer Antriebsperiode wird der über eine Kontrolleinheit gesteuerte Läufer jeweils genau einmal mit einer der beiden Kontaktseiten der losen Kopplung gegen den Schläger bewegt und letzterer somit jeweils im einseitigen Kontaktzwang eingefangen. Der Schlag des Schlägers auf das Werkzeug erfolgt im entkoppelten Zustand zum Läufer, wodurch die Stossbewegung des Schlägers nicht auf den Läufer zurückwirkt.

Nach der W02006108524 ist der Schläger über eine derartige lose Kopplung mit dem permanentmagnetischen Läufer eines einphasigen Linearmotors mit ausgeprägten Polen verbunden, welcher leistungsstärker bezüglich eines Linearmotors ohne ausgeprägte Pole ist. Da bei einem einphasigen Linearmotor mit ausgeprägten Polen die auf den Läufer wirksame Kraft entsprechend der Polteilung örtlich periodisch ist und zudem in den Nullstellen dieser eine den Läufer festhaltende Rastkraft ausgebildet wird, ist eine übliche Kontrolleinheit eines Linearmotors ohne ausgeprägte Pole für den Läufer ungeeignet.

Die Aufgabe der Erfindung besteht in der Realisierung eines Verfahrens zur Steuerung eines Linearmotors mit ausgeprägten Polen zum Antrieb eines Schlagwerks, welches ein Steckenbleiben des Läufers an den ausgeprägten Polen verhindert. Ein weiterer Aspekt besteht darin, den über eine lose Kopplung verbundenen Schläger trotz des örtlich periodischen Kraftverlaufs ermüdungsarm einzufangen, d.h. ohne hohe Beanspruchungen.

Die Aufgabe wird im Wesentlichen durch die Merkmale des Anspruchs 1 gelöst. Vorteilhafte Weiterbildungen ergeben sich aus den Unteransprüchen.

So weist ein Verfahren zur Steuerung eines einphasigen Linearmotors zum Antrieb eines Schlagwerks mit einer losen Kopplung zwischen einem geregelt angetriebenen Läufer des Linearmotors und einem Schläger des Schlagwerks innerhalb einer genau einen Kraftstoss des Schlägers auf ein Werkzeug oder einen Döpper ausführenden Schlagperiode eine Zugphase, bei welcher die lose Kopplung an einer läuferseitigen Kontaktfläche mit einem einseitigen Kontaktzwang anliegt, und eine Druckphase auf, bei welcher die lose Kopplung an einer schlägerseitigen Kontaktfläche mit einem einseitigen Kontaktzwang anliegt, und wobei jeweils zwischen der Zugphase und der Druckphase je eine Wechselphase vorhanden ist, bei welcher der einseitige Kontaktzwang über eine kontaktfreie Spiellänge zwischen den beiden Kontaktflächen wechselt, indem der Läufer geregelt den einseitigen Kontaktzwang zu der einen Kontaktfläche löst und den einseitigen Kontaktzwang zur anderen Kontaktfläche herstellt, wobei zumindest die Wechselphase von der Zugphase zur Druckphase mit der örtlichen Lage des Läufers zur Polperiode von ausgeprägten Polen des Linearmotors diskret getriggert wird.

Durch die diskrete Triggerung der Wechselphase mit der örtlichen Lage des Läufers relativ zur Polperiode der ausgeprägten Polen des Linearmotors sind weitgehend reproduzierbare Anfangsbedingungen für den Regelkreis vorhanden, selbst wenn dieses bei örtlich unterschiedlichen Perioden des Läufers geschieht, bei welcher als weitere Nebenbedingung auch ein Geschwindigkeitskriterium erfüllt ist.

Vorteilhaft wechselt der einseitige Kontaktzwang in der Wechselphase, indem in einer Bremsphase durch ein Abbremsen des Läufers der einseitige Kontaktzwang der losen Kopplung zu der einen Kontaktfläche gelöst und in einer Fangphase über eine geregelte Annäherung des Läufers der einseitige Kontaktzwang der losen Kopplung zur anderen Kontaktfläche wiederhergestellt wird, wodurch auch die Fangphase mit der örtlichen Lage des Läufers zur Polperiode von ausgeprägten Polen des Linearmotors diskret triggerbar ist.

Vorteilhaft beinhaltet der für die Wechselphase aktive Regelkreis eine Differenzpositionsregelung mit unterlagerter Differenzgeschwindigkeitsregelung, wobei weiter vorteilhaft beide Regelungen als Proportional-Integral-Differential(PID) Regelungen ausgebildet sind, wodurch ein zu wiederholten Kontaktstössen innerhalb der losen Kopplung führendes Überschwingen vermieden wird, welches die Permanentmagnetisierung und Dauerfestigkeit des Läufers schädigen würde.

Vorteilhaft setzt die Fangphase erst ein, nachdem als zusätzliche Nebenbedingung ein Geschwindigkeitsdifferenzgrenzwert zwischen dem Schläger und dem Läufer betragsmässig unterschritten worden ist, wodurch stets ein sanftes Kontaktieren erfolgt, wodurch dieses sicher unterhalb der Dauerfestigkeitsgrenze für Druckschwellbelastungen der losen Kopplung liegt. Weiter vorteilhaft wird in der Fangphase von einer geregelten in eine gesteuerte Annäherung umgeschaltet, nachdem als auflösende Bedingung ein Positionsdifferenzgrenzwert zwischen dem Schläger und dem Läufer betragsmässig unterschritten worden ist, wodurch ein schleichendes Annähern verhindert wird und die beiden Körper wesentlich schneller in Kontakt kommen.

Vorteilhaft setzt die sich an die Zugphase anschliessende Wechselphase erst dann ein, wenn in der nachfolgenden Druckphase durch die Geschwindigkeit des Schlägers und Läufers eine vorgegebene Sollenergie erreicht wird (optional unter Berücksichtigung von weiteren Reibungsverlusten), wodurch die Schlagleistung steuerbar ist.

Vorteilhaft setzt die sich an die Druckphase anschliessende Wechselphase genau dann ein, wenn eine durch die Läufergeschwindigkeit und Läuferposition notwendige Bremsenergie, mit welcher der Läufer (optional unter Berücksichtigung von weiteren Reibungsverlusten) vor einem werkzeugseitigen Umkehrpunkt (der optional abhängig von der Lage des Werkzeugs bzw. Döppers ist) gerade noch zur Bewegungsrichtungsumkehr abgebremst werden kann, eine durch die elektrodynamisch verfügbare Antriebsenergie vorgegebenen Grenzenergie erreicht, wodurch die maximale Schlagleistung erzielbar ist.

Vorteilhaft dient bei sensorisch ermittelten Positionen und Geschwindigkeiten von Schläger und Läufer zur Bestimmung der verschiedenen kinetischen Energien und der zur Verfügung stehenden Antriebsenergie (Bremsenergie), bzw. direkt der Einsatzpositionen der Wechselphasen zumindest ein (mehrdimensional adressierbares) Speicherarray mit experimentell oder über ein Simulationsmodell ermittelten Stützwerten, zwischen denen weiter vorteilhaft mehrdimensional interpoliert wird, wodurch die notwendigen Regelungsschritte sehr schnell ausführbar sind, um Schlagfrequenzen zwischen 10Hz und 100Hz zu erzielen.

Vorteilhaft ist während der Druckphase im hinteren Totpunkt der Bewegung des Läufers und des Schlägers eine Ruhephase vorhanden, wodurch über deren Zeitdauer die Schlagfrequenz gesteuert werden kann.

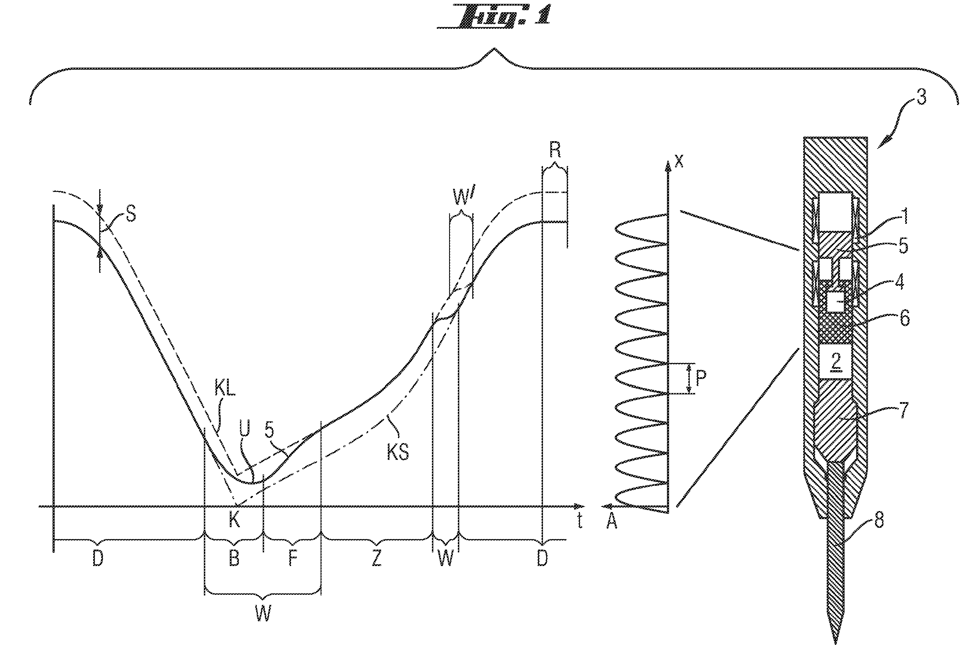

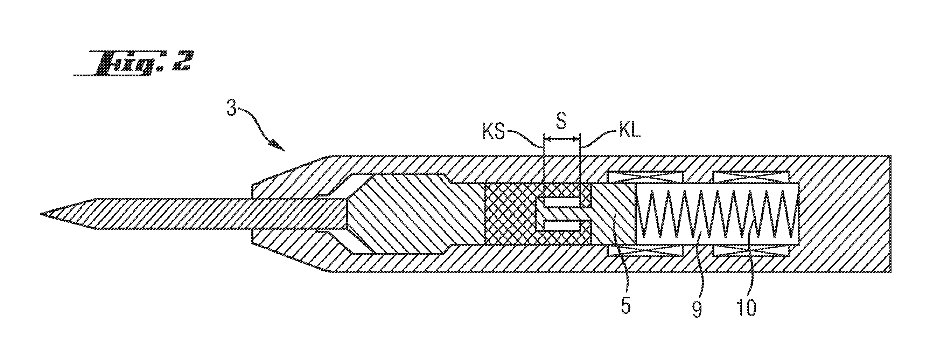

Die Erfindung wird bezüglich eines vorteilhaften Ausführungsbeispiels näher erläutert mit Fig. 1 als gesteuerter Bewegungsablauf im Ort-Zeit-Diagramm der Handwerkzeugmaschine Fig. 2 als Variante der Handwerkzeugmaschine

Nach Fig. 1 bewirkt ein Verfahren zur Steuerung des einphasigen Linearmotors 1 zum Antrieb des Schlagwerks 2 einer Handwerkzeugmaschine 3 mit einer losen Kopplung 4 zwischen einem geregelt angetriebenen Läufer 5 des Linearmotors 1 und einem Schläger 6 des Schlagwerks 2 einen geregelten Bewegungsablauf des Läufers 5, bei welcher innerhalb einer dargestellten Schlagperiode genau ein Kraftstoss K des Schlägers 6 über einen Döpper 7 auf ein Werkzeug 8 erfolgt. Die Schlagperiode weist eine Zugphase Z und eine Druckphase D auf, die sich jeweils alternierend über eine Wechselphase W abwechseln. Bei der Zugphase Z liegt die lose Kopplung 4 an einer läuferseitigen Kontaktfläche KL (Fig. 2) mit einem einseitigen Kontaktzwang an. Bei der Druckphase D liegt die lose Kopplung 4 an einer schlägerseitigen Kontaktfläche KS (Fig. 2) mit einem einseitigen Kontaktzwang an. Bei der Wechselphase W wechselt der einseitige Kontaktzwang über eine kontaktfreie Spiellänge S (Fig. 2) zwischen den beiden Kontaktflächen KL - KS (Fig. 2), indem in einer Bremsphase B durch ein aktives Abbremsen des Läufers 5 der einseitige Kontaktzwang zu der einen Kontaktfläche gelöst und in einer Fangphase F über eine geregelte Annäherung des Läufers 5 an den sich bis auf die Reibung frei beweglichen Schläger 6 der einseitige Kontaktzwang zur anderen Kontaktfläche wiederhergestellt wird. Diese Wechselphase W wird mit der örtlichen Lage des Läufers 5 relativ zur Polperiode P von ausgeprägten Polen (nicht dargestellt) des Linearmotors 1 diskret getriggert - wodurch zu einer betrachteten Wechselphase W eine örtlich nächstliegende Wechselphase W' genau um eine Polperiode P diskret verschoben ist, bei welcher wieder der gleiche Verlauf der Antriebskraft A des Linearmotors 1 vorliegt. Der innerhalb des Verfahrens für die Wechselphase W aktive Regelkreis beinhaltet eine Differenzpositionsregelung zwischen Läufer 5 und Schläger 6 mit unterlagerter Differenzgeschwindigkeitsregelung zwischen diesen, wobei beide Regelungen als Proportional-Integral-Differential(PID) Regelungen ausgebildet und derart abgestimmt sind, dass das Prellen zwischen dem Läufer 5 und dem Schläger 6 minimiert wird. Die Fangphase F beim Wechsel von der Druckphase D zur Zugphase Z setzt erst ein, wenn als zusätzliche Nebenbedingung ein Geschwindigkeitsdifferenzgrenzwert zwischen dem Schläger 6 und dem Läufer 5 von 0.1 m/s betragsmässig unterschritten worden ist, diese also praktisch identisch sind. Dabei wird in eine gesteuerte Annäherung umgeschalten, wenn ein Positionsdifferenzgrenzwert zwischen dem Schläger 6 und dem Läufer 5 betragsmässig < 0.2 mm unterschritten worden ist. Die sich an die Zugphase Z anschliessende Wechselphase W setzt erst dann ein, wenn durch die gemeinsame Geschwindigkeit des Schlägers 6 und des Läufers 5 eine vom Nutzer steuerbar vorgegebene Sollenergie ES erreicht ist. Die sich an die Druckphase D anschliessende Wechselphase W setzt genau dann ein, nachdem eine durch die Läufergeschwindigkeit und Läuferposition notwendige Bremsenergie EB, mit welcher der Läufer 5 vor einem werkzeugseitigen Umkehrpunkt U, der abhängig von der Lage des Werkzeugs 8 und des Döppers 7 ist, gerade noch zur Bewegungsrichtungsumkehr abgebremst werden kann, eine durch die elektrodynamisch maximal verfügbare Antriebsenergie vorgegebenen Grenzenergie EG 4 J erreicht. Zur Bestimmung der verschiedenen kinetischen Energien ES, EB bzw. direkt der Einsatzpositionen der Wechselphasen W dient bei den sensorisch ermittelten Positionen und Geschwindigkeiten von Schläger 6 und Läufer 5 ein mehrdimensional adressierbares Speicherarray mit experimentell oder über ein Simulationsmodell ermittelten Stützwerten, zwischen denen mehrdimensional interpoliert wird. Während der Druckphase D im hinteren Totpunkt der Bewegung des Läufers 5 und des Schlägers 6 ist eine Ruhephase R vorhanden.

Nach Fig. 2 wird die Antriebskraft A des Linearmotors 3 zusätzlich durch eine hinter dem Läufer 5 angeordnete Luftfeder 9 und/oder mechanische Druckfeder 10 unterstützt. Bei der Berechnung wird dann die Kraft bzw. Energie dieser Federn mit berücksichtigt.

## Patentansprüche

1. Verfahren zur Steuerung eines einphasigen Linearmotors (1) zum Antrieb eines Schlagwerks (2) mit einer losen Kopplung (4) zwischen einem geregelt angetriebenen Läufer (5) des Linearmotors (1) und einem Schläger (6) des Schlagwerks (2), welcher innerhalb einer genau einen Kraftstoss (K) des Schlägers (6) auf ein Werkzeug (8) oder einen Döpper (7) ausführenden Schlagperiode eine Zugphase (Z), bei welcher die lose Kopplung (4) an einer läuferseitigen Kontaktfläche (KL) mit einem einseitigen Kontaktzwang anliegt, und eine Druckphase (D) aufweist, bei welcher die lose Kopplung (4) an einer schlägerseitigen Kontaktfläche (KS) mit einem einseitigen Kontaktzwang anliegt, und wobei jeweils zwischen der Zugphase (Z) und der Druckphase (D) je eine Wechselphase (W) vorhanden ist, bei welcher der einseitige Kontaktzwang über eine kontaktfreie Spiellänge (S) zwischen den beiden Kontaktflächen (KL-KS) der losen Kopplung (4) wechselt, indem der Läufer (5) geregelt den einseitigen Kontaktzwang zu der einen Kontaktfläche (KL/KS) löst und den einseitigen Kontaktzwang zur anderen Kontaktfläche (KS/KL) herstellt, **dadurch gekennzeichnet, dass** zumindest die Wechselphase (W) von der Zugphase (Z) zur Druckphase (D) mit der örtlichen Lage des Läufers (5) zur Polperiode (P) von ausgeprägten Polen des Linearmotors (1) diskret getriggert wird.

2. Verfahren nach Anspruch 1, **dadurch gekennzeichnet, dass** der einseitige Kontaktzwang in der Wechselphase (W) wechselt, indem in einer Bremsphase (B) durch ein Abbremsen des Läufers (5) der einseitige Kontaktzwang der losen Kopplung (4) zu der einen Kontaktfläche (KL/KS) gelöst und in einer Fangphase (F) über eine geregelte Annäherung des Läufers (5) der einseitige Kontaktzwang der losen Kopplung (4) zur anderen Kontaktfläche (KS/KL) wiederhergestellt wird

3. Verfahren nach Anspruch 1 oder 2, **dadurch gekennzeichnet, dass** der für die Wechselphase (W) aktive Regelkreis eine Differenzpositionsregelung mit unterlagerter Differenzgeschwindigkeitsregelung beinhaltet.

4. Verfahren nach einem der Ansprüche 1 bis 3, **dadurch gekennzeichnet, dass** die Fangphase (F) erst einsetzt, nachdem als zusätzliche Nebenbedingung ein Geschwindigkeitsdifferenzgrenzwert zwischen dem Schläger (6) und dem Läufer (5) betragsmässig unterschritten worden ist.

5. Verfahren nach einem der Ansprüche 1 bis 4, **dadurch gekennzeichnet, dass** die sich an die Zugphase (Z) anschliessende Wechselphase (W) erst dann einsetzt, wenn in der nachfolgenden Druckphase durch die Geschwindigkeit des Schlägers (6) und Läufers (5) eine vorgegebene Sollenergie (ES) erreicht wird.

6. Verfahren nach einem der Ansprüche 1 bis 5, **dadurch gekennzeichnet, dass** die sich an die Druckphase (D) anschliessende Wechselphase (W) genau dann einsetzt, wenn eine durch die Läufergeschwindigkeit und Läuferposition notwendige Bremsenergie (EB), mit welcher der Läufer (5) vor einem werkzeugseitigen Umkehrpunkt (U) gerade noch zur Bewegungsrichtungsumkehr abgebremst werden kann, eine durch die elektrodynamisch verfügbare Antriebsenergie vorgegebenen Grenzenergie (EG) erreicht.

7. Verfahren nach einem der Ansprüche 1 bis 6, **dadurch gekennzeichnet, dass** bei sensorisch ermittelten Positionen und Geschwindigkeiten von Schläger (6) und Läufer (5) zur Bestimmung der verschiedenen kinetischen Energien (ES) und der zur Verfügung stehenden Antriebsenergie oder Bremsenergie, (EB) bzw. direkt der Einsatzpositionen der Wechselphasen (W) zumindest ein Speicherarray mit experimentell oder über ein Simulationsmodell ermittelten Stützwerten dient.

8. Verfahren nach einem der Ansprüche 1 bis 7, **dadurch gekennzeichnet, dass** während der Druckphase (D) im hinteren Totpunkt der Bewegung des Läufers (5) und des Schlägers (6) eine Ruhephase (R) vorhanden ist.
